# EUROPEAN PATENT SPECIFICATION

(11) **EP 0 272 152 B1**
(45) Date of publication and mention of the grant of the patent: **03.08.1994**
(21) Application number: 87311218.9
(22) Date of filing: 18.12.1987
(51) Int. Cl.: H04N 3/15

(54) **Signal reading out circuit**
Signalausleseschaltung
Circuit de lecture de signal

(30) Priority: 18.12.1986 JP 302211/86; 25.05.1987 JP 125924/87
(43) Date of publication of application: 22.06.1988
(73) Proprietor: CANON KABUSHIKI KAISHA, Tokyo (JP)
(72) Inventor: Hashimoto, Seiji, Yokohama-shi Kanagawa-ken (JP); Satoh, Tamotsu, Yokohama-shi Kanagawa-ken (JP); Sugawa, Shigetoshi, Atsugi-shi Kanagawa-ken (JP)
(74) Representative: Beresford, Keith Denis Lewis

(56) References cited:
- EP-A- 0 128 828
- US-A- 3 676 590
- US-A- 4 291 337
- PATENT ABSTRACTS OF JAPAN, vol. 9, no. 240 (E-345)[1963], 26th September 1985;& JP-A-60 91 666 (MATSUSHITA DENKI SANGYO K.K.) 23-05-1985

## Description

The present invention relates to a signal read-out circuit for image conversion. Its function is to read out a plurality of signals to a signal line. Such signals may, for example, be taken from the outputs of a photoelectric cell array.

Fig. 6A is a circuit diagram showing an example of a conventional signal read-out circuit.

In the diagram, after a plurality of signals Sₗ to Sₙ have accumulated into capacitors Cₗ to Cₙ having a capacitance Cₜ, they are sequentially read out to a signal line 401 through switching transistors Qₗ to Qₙ and output from an amplifier 403. The switching transistors Q₁ to Qₙ are turned on or off by scan pulses Φₕₗ to Φₕₙ which are output from a scan circuit 402.

However, this conventional circuit has the following problems/drawbacks:
(1) Since the signal line 401 has a stray capacitance Cₕ, when the signals are transferred from the capacitance Cₜ of the capacitors Cₗ to Cₙ to the capacitance Cₕ, the signal level of the signal line 401 decreases by the capacitance division to a value which is Cₜ/(Cₜ + Cₕ) times as low as the level when the signals were accumulated into the capacitors.
   In particular, in the case of a high density sensor or the like which has a large number n of signals, the capacitance Cₕ of the signal line 401 increases, so that the output decreases remarkably.
(2) Increase in the capacitance Cₜ, as a method of preventing this decrease in output, would result in an increase in load capacitance of the sensor in the case where, for example, the signals Sₗ to Sₙ are input from a sensor. There arises a drawback in that the speed of transferring sensor signals S to the capacitors is decreased and high speed operation cannot be performed.

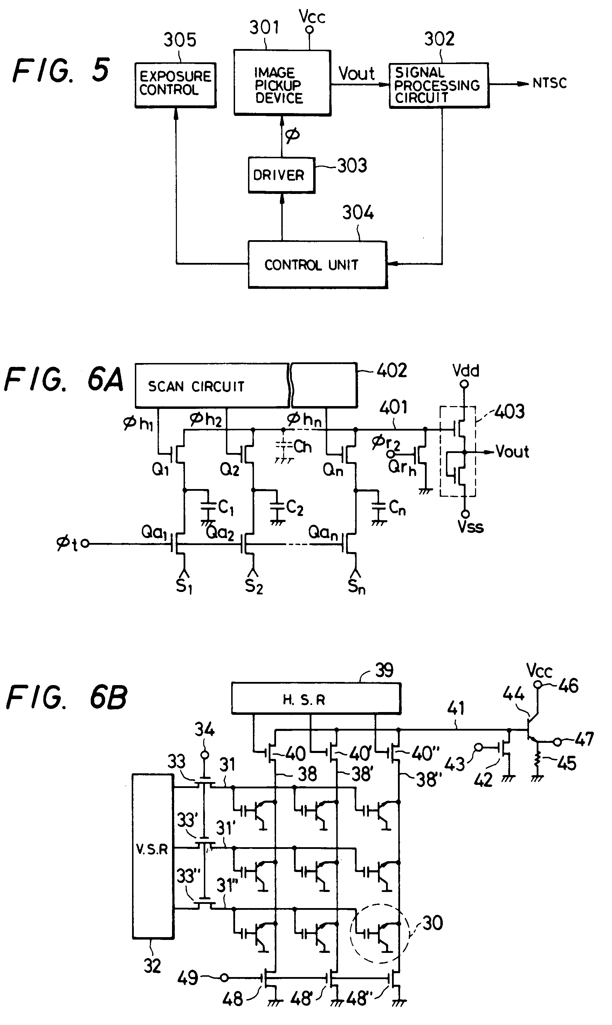

On the other hand, in a conventional photoelectric converting apparatus using such a read-out circuit, signals generated and accumulated in photoelectric converting areas are transferred to a first capacitive area such as a vertical line or the like provided separately from the photoelectric converting areas. The signals accumulated in the first capacitive area are transferred to a second capacitive area such as a horizontal output line or the like, and the signals accumulated in the second capacitance area are output to the outside. An example of such a conventional photoelectric converting apparatus will be explained with reference to Fig. 6B.

Fig. 6B is a circuit constitutional diagram of a photoelectric converting apparatus in which fundamental photosensor cells 30 are two-dimensionally arranged in a matrix form of 3 x 3.

In Fig. 6B, reference numeral 30 denotes the fundamental photosensor cells which are constituted in the following manner. The carriers generated in the PN junction portion of a bipolar transistor by the light excitation are accumulated into a base region. An output line connected to an emitter region is set into the floating state. By applying positive pulses to the base through a capacitor connected thereto, the carriers accumulated in the base region are read out so as not to be destroyed. The output line connected to the emitter region is, for example, grounded. By applying positive pulses to the base through the capacitor, the carriers accumulated in the base region are erased. The photoelectric converting apparatus in Fig. 6B will now be described with reference to the diagram. The conventional photoelectric converting apparatus in Fig. 6B comprises horizontal lines 31, 31ʹ, and 31ʺ to apply readout pulses and refreshing pulses; a vertical shift register 32 to generate the readout pulses and refreshing pulses; a terminal 34 to apply gate pulses of buffer MOS transistors 33, 33ʹ, and 33ʺ which are arranged among the vertical shift register 32 and the horizontal lines 31, 31ʹ, and 31ʺ; vertical lines 38, 38ʹ, and 38ʺ to read out the accumulated voltages from the fundamental photosensor cells 30; a horizontal shift register 39 to generate pulses to select each vertical line; MOS transistors 40, 40ʹ, and 40ʺ for gates to open or close each vertical line; a horizontal output line 41 to read out the accumulated voltages to an amplifying section; an MOS transistor 42 to refresh the charges accumulated and held in the output line 41 after they were read out; a terminal 43 to apply the refreshing pulse to the MOS transistor 42; a transistor 44 such as bipolar transistor, MOS-FET, J-FET, or the like to amplify the output signal; a load resistor 45; a terminal 46 to connect the transistor with a power source; an output terminal 47 of the transistor; MOS transistors 48, 48ʹ, and 48ʺ to refresh the charges accumulated in the vertical lines 38, 38ʹ, and 38ʺ in the reading operation; and a terminal 49 to apply pulses to gates of the MOS transistors 48, 48ʹ, and 48ʺ. In such a photoelectric converting apparatus, a pulse is first applied to the terminal 49, thereby turning on the MOS transistors 48, 48ʹ, and 48ʺ. The vertical lines 38, 38ʹ, and 38ʺ are previously grounded and cleared. Next, the MOS transistors 48, 48ʹ, and 48ʺ are turned off. Pulses are applied through the MOS transistors 33, 33' and 33" to the horizontal lines 31' 31' , and 31'' selected by the vertical shift register 32. The signals of the photosensor cells 30 are read out to the vertical lines 38, 38' , and 38'' in the floating state. The vertical lines 38, 38' , and 38'' have a line capacitive component. The signals corresponding to the signals of the photosensor cells are held in the capacitance of the vertical lines by the reading operations. Next, the MOS transistors 40, 40' and 40'' are then sequentially selected by the horizontal shift register 39. The signals held in the line capacitance of the vertical lines 38, 38', and 38'' are applied through the horizontal line 41 to a control electrode of the transistor 44. The signals corresponding to the outputs of the photosensor cells 30 are sequentially output from the terminal 47.

On the other hand, when later the pulses are applied through the capacitors connected to the bases of the photosensor cells 30 if the pulses are applied to the terminal 49 and the vertical lines 38, 38' , and 38'' are grounded, the carriers accumulated in the base regions can be erased.

Even in the foregoing conventional photoelectric converting apparatus, when the signals held in the line capacitance of the vertical lines 38, 38', and 38'' are sequentially applied through the horizontal line 41 to the control electrode of the transistor 44, the level of the signal which is applied to the transistor 44 is determined by the ratio of the line capacitance of the horizontal line 41 and the line capacitance of the vertical lines 38, 38', and 38'' which are accessed by the horizontal register 39. Thus, this signal level decreases in dependence on the dividing ratio of the capacitance.

Such a reduction in signal level becomes even worse with increase in the number of horizontal pixels. This is because the capacitance of the horizontal line 41 substantially increases in proportion to the number of MOS transistors 40, 40', 40'', ... used for gating

Therefore, to avoid reduction in signal level, it is necessary to increase the capacitance of the vertical lines or to use a multi-output line system in which the horizontal line is divided.

However, there are drawbacks and problems in that the former method gives rise to an increase in chip area and the latter method gives rise to an increase in the number of output terminals, i.e., number of pins, required.

On the other hand, an amplifier can be inserted between the vertical line and the horizontal line to avoid reduction in signal level. However, this has a drawback in that then the design of the amplifying section is complicated, the area is increased and the design of the horizontal shift register section is more complicated.

There is known from US-A-3676590 an arrangement in which signals from a plurality of photodetectors are input to the bases of a plurality of bipolar transistors. The emitters of the bipolar transistors are coupled to a horizontal scan generator and the collectors of the bipolar transistors are connected to a common output line. The horizontal scan generator changes the voltage applied to the emitters of the transistors in turn, turning the transistors on in turn. When a transistor is turned on, it provides an output signal to the common output line from its collector, amplified by the transistor action. The common output line is connected through a capacitor to a video amplifier if desired, and is also connected through a resistor to a constant voltage. The impedance provided by these connections will affect the voltage appearing on the common output line.

An arrangement is known from EP-A-0128828 in which signals from respective photosensors are stored under respective storage gates and are provided to the gates of respective MOS transistors. The drain of each MOS transistor is connected to a drain voltage and the source is connected to a common amplifier through respective further MOS transistors. The gates of the respective further MOS transistors are connected to outputs of a shift register, and the further MOS transistors are turned on in turn to apply the outputs from the first MOS transistors to the common amplifier in turn. A source voltage is provided through a third MOS transistor, having its gate coupled to its source. A single third MOS transistor may be provided, coupled to the input of the amplifier, or alternatively a plurality of respective third MOS transistors may be provided connected to the respective junctions between the first MOS transistors and the second MOS transistors. The first MOS transistors are described as being followers.

The present invention is intended as a remedy to the problems just described.

According to the present invention there is provided a signal read-out circuit as set out in claim 1. There is also provided an image conversion device including such circuit as set out in claim 7. Optional features are set out in the remaining claims.

The signal read-out circuit according to the invention has bipolar transistor amplifiers for respectively receiving a plurality of signals, in which each output of the amplifiers is read out to a signal line through a series resistor means.

Since the signals are read out to the signal line by the amplifier and resistor means constituted as explained above, for example, even in the case where the signals are transferred from an accumulation capacitance Cₜ to a capacitance Cₕ of the signal line, the gain can be set to about 1. The conventional problem of the reduction in signal level can be solved. On the other hand, the accumulation capacitance Cₜ as the load capacitance can be reduced due to this and high speed operation can be performed.

On the other hand, since the amplifier drives the signal line through the resistor means, the output current of the amplifier is limited by the resistor means. Therefore, since a bipolar transistor is used as the amplifier, any increase in diffusion capacitance between the base and the emitter is avoided and variations in readout signal due to variations in diffusion capacitance are suppressed.
In the drawings:
Fig. 1 is a circuit diagram of a signal read-out circuit embodying the present invention;
Fig. 2A is a diagram showing a fundamental drive circuit to drive a photosensor;
Fig. 2B is a timing chart for explaining the operation of this drive circuit;
Fig. 3 is a circuit diagram of an example of an image pickup device constituted by the signal read-out circuit of Figure 1 and a photosensor;
Fig. 4 is a timing chart for explaining the operation of the device shown in the prededing figure;
Fig. 5 is a schematic diagram of an image pickup apparatus using an image pickup device; and
Figs. 6A and 6B are circuit diagrams showing an example of a conventional signal read-out circuit and a photoelectric converting apparatus.

An embodiment of the present invention will be described in detail hereinbelow with reference to the drawings. The following description is given by way of example only.

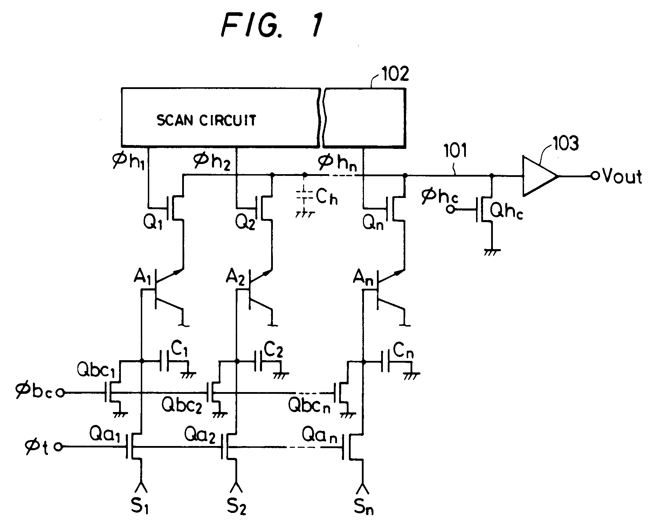

Fig. 1 is a circuit diagram of a signal read-out circuit embodying the invention.

In the diagram, a plurality of signals S (S₁ to Sₙ) are accumulated into accumulation capacitors C (C₁ to Cₙ) having a capacitance Cₜ through transfer transistors Qₐ (Qₐ₁ to Qₐₙ).

Pulses φₜ are commonly input to gate electrodes of the transistors Qₐ, thereby turning on or off each transistor.

On the other hand, resetting transistors Q_{bc} (Q_{bc1} to Q_{bcn}) are connected in parallel with the capacitors C. Reset pulses φ_{bc} are input to gate electrodes of the transistors Q_{bc}, respectively.

Each signal accumulated in the capacitors C is amplified by amplifiers A and output to emitter sides. In this state, the scan pulses φₕ₁ to φₕₙ are sequentially output from a scan circuit 102, thereby sequentially turning on the switching transistors Q (Q₁ to Qₙ) and sequentially reading out output signals of the amplifiers A to a signal line 101. The signals read out to the signal line 101 are output to the outside through an output amplifier 103. However, each time one signal is output, a transistor Q_{hc} is turned on by the pulse φ_{hc} and the signal line 101 is cleared.

In this manner, the outputs of the amplifiers A are read out to the signal line 101 through the switching transistors Q. Namely, the outputs of the amplifiers A are read out to the signal line 101 through the transistors Q, respectively.

With this constitution, a variation in output signal which is generated due to the amplifier A can be suppressed. For example, a fixed pattern noise generated when the image signals S are reproduced can be suppressed. An explanation of these suppressing effects will now be given.

When the accumulation signal S in the capacitor C is input to the base of the amplifier A, the signal output to the emitter side is returned to the base by the capacitance C_{be} between the base and the emitter. At this time, if the capacitances C_{be} of the amplifiers are different, this causes a variation in output signal.

On the other hand, in general, the base-emitter capacitance C_{be} in the bipolar transistor dominantly depends on a junction capacitance C_{bej} when the circuit between the base and the emitter is in the reverse biased state, while the capacitance C_{be} dominantly depends on a diffusion capacitance C_{de} when the circuit between the base and the emitter is in the forward biasing state. On the other hand, it is also known that the diffusion capacitance C_{d} increases with increases in the emitter current. Therefore, in the case of an npn type bipolar transistor used in the amplifier A in this embodiment, when the signal S is input to the base and the circuit between the base and the emitter changes in the forward biasing direction, the base-emitter capacitance C_{be} dominantly depends on the diffusion capacitance C_{de}. Further, the capacitance C_{de}, i.e., C_{be} increases with the increase in emitter current. When the values of C_{de} of the respective amplifiers A are different, the output signals are returned to the bases as mentioned above, so that a variation in output signal occurs.

Therefore, to prevent the variation in output signal, it is necessary to suppress an increase in the diffusion capacitance C_{de}. For this purpose, the emitter current needs to be reduced.

Therefore, as shown in Fig. 1, the circuit is configured so that the emitter current of the amplifier A is reduced by use of the ON resistance of the switching transistor Q.

For example, when the scan pulse φₕ₁ is output from the scan circuit 102 and the switching transistor Q₁ is turned on, the emitter current corresponding to the signal S₁ is transmitted from the amplifier A₁ through the transistor Q₁ and flows into the capacitance Cₕ of the signal line 101. At this time, since the emitter current is reduced by the ON resistance of the transistor Q₁, the increase in diffusion capacitance C_{de} between the base and the emitter of the amplifier A₁ is reduced The same shall also apply to the other amplifiers A₂ to Aₙ. Thus, the signals which are read out to the signal line 101 are obtained as the signals in which variations due to the amplifiers A are significantly reduced.

An example of an image pickup device using this embodiment will now be explained.

First, a photosensor which is used in this image pickup device will be explained. This photosensor has fundamentally been disclosed in Japanese Patent Application No. 120751/1983.

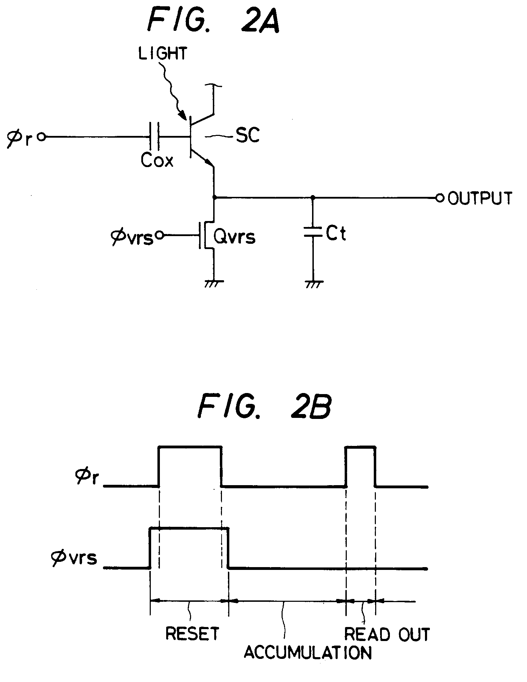

Fig. 2A is a diagram showing a fundamental drive circuit to drive the photosensor. Fig. 2B is a timing chart for explaining the operation of this drive circuit.

In Fig. 2A, a photosensor SC comprises a bipolar transistor and a capacitor C₀ₓ to control the base potential. When the carriers excited by the incident light are accumulated into the base of the bipolar transistor, the photoelectric converting operation is executed.

A drive pulse φᵣ of a positive voltage is input to a capacitor electrode of the photosensor SC. An emitter electrode is grounded through a transistor Qᵥᵣₛ. A pulse φᵥᵣₛ is input to a gate electrode of the transistor Qᵥᵣₛ. Further, a capacitor Cₜ for temporary accumulation is connected to the emitter electrode.

In the foregoing arrangement, by applying pulses at timings as shown in Fig. 2B, the photosensor executes the operations to reset, accumulate, and read out, respectively.

First, the transistor Qᵥᵣₛ is turned on by the pulse φᵥᵣₛ and the emitter electrode of the photosensor SC is grounded. In this state, the pulse φᵣ is input to the capacitor electrode. Thus, the bipolar transistor operates and the carriers accumulated in the base are eliminated (resetting operation).

After accumulation of the carriers produced by incident light has been performed, the emitter side is set into the floating state and the pulse φᵣ is applied. Thus, the bipolar transistor operates and the accumulated voltage in the base is read out to the emitter side (reading operation) and temporarily stored in the capacitor Cₜ.

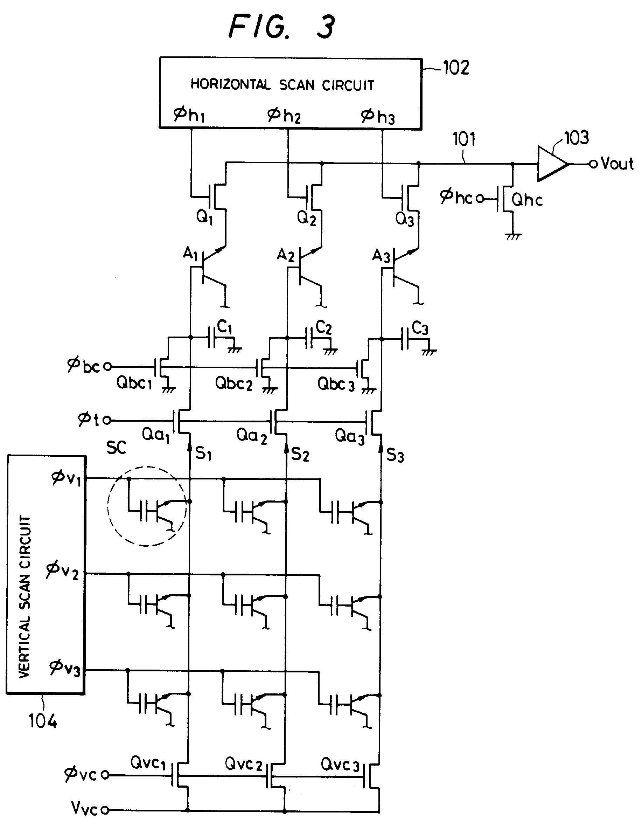

Fig. 3 is a circuit diagram of an image pickup device comprising the signal read-out circuit as previously described and the foregoing photosensor. An example of an area sensor consisting of photosensors arranged in a matrix form of 3 x 3 is shown in Fig. 3 for convenience of explanation. However, there is no essential difference even in the case of using an arbitrary number of sensors of m x n.

Since the section of this embodiment is similar to the arrangement shown in Fig. 1, the same parts and components as those in Fig. 1 are designated by the same reference numerals and description is omitted.

The (3 x 3) photosensors SC are arranged in a matrix form to constitute an area sensor, thereby constituting an image pickup section. The capacitor electrodes of the photosensors SC are commonly connected every horizontal line. Vertical scan pulses φᵥ (φᵥ₁ to φᵥ₃) are supplied to the capacitor electrodes from a vertical scan circuit 104.

On the other hand, the emitter electrodes of the photosensors SC are commonly connected every vertical line and respectively connected to the transfer transistors Qₐ (Qₐ₁ to Qₐ₃). Further, a constant voltage V_{vc} is applied to each vertical line through reset transistors Q_{vc} (Q_{vc1} to Q_{vc3}). The pulses φ_{vc} are input to the gate electrodes of the transistors Q_{vc}.

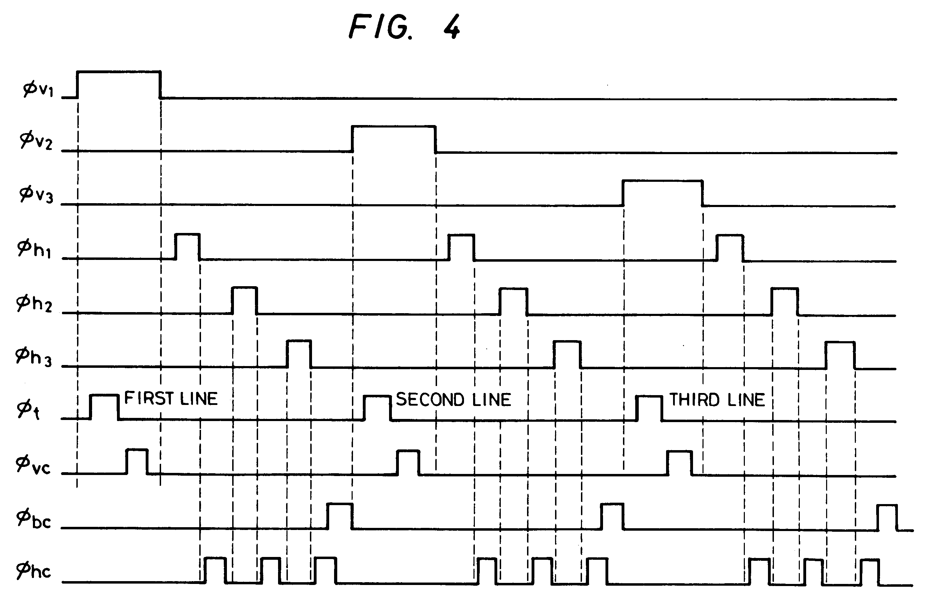

Fig. 4 is a timing chart for explaining the operation of the image pickup device.

First, it is assumed that the charges generated by the light excitation have already been accumulated in each photosensor SC. In this state, the scan pulse φᵥ₁ is output from the vertical scan circuit 104. The signals S are read out to the emitter side by the reading operations of the photosensors SC of the first row.

The transistor Qₐ is turned on by the transfer pulse φₜ and the signals S of the first row are accumulated into the capacitors C. Then, when the pulse φₜ falls, the transistor Q_{vc} is turned on by the pulse φ_{vc} and the vertical line is reset.

Subsequently, the horizontal scan pulses φₕ are sequentially output from the horizontal scan circuit 102. The signals amplified by the amplifier A are sequentially read out to the signal line 101 and output as an image signal Vₒᵤₜ through the amplifier 103. In this case, whenever each signal is output, the transistor Q_{hc} is turned on by the pulse φ_{hc} and the signal line 101 is reset. On the other hand, when the signals of the first row are read out, the transistor Q_{bc} is turned on by the pulse φ_{bc} and the residual charges in the capacitors C are eliminated.

The foregoing operations are also similarly executed with respect to the second and third rows. Thus, the signals of all of the photosensors SC can be serially output. Further, as already mentioned above, since the signals are amplified by the amplifiers A, the outputs do not decrease. In addition, the signals are read out to the signal line 101 through the ON resistances of the transistors Q. Thus, the variation in signal due to the amplifiers A is suppressed.

Fig. 5 is a schematic constitutional diagram of an example of an image pickup apparatus using the image pickup device.

In the diagram, an image pickup device 301 is an area sensor in which the circuit shown in Fig. 3 is constituted as a general circuit consisting of the (m x n) photosensors. The output signal Vₒᵤₜ of the image pickup device 301 is subjected to the processes such as gain adjustment and the like by a signal processing circuit 302. Thus, a standard television signal such as an NTSC signal or the like is output.

The foregoing respective pulses to drive the image pickup device 301 are supplied from a driver 303. The driver 303 is driven by the control of a control unit 304. The control unit 304 adjusts a gain and the like of the signal processing circuit 302 on the basis of an output of the image pickup device 301 and also controls an exposure control 305, thereby adjusting an amount of incident light to the image pickup device 301.

In an NTSC signal obtained using the embodiment as explained above, since the variation in output signal is suppressed as mentioned above, even if it is reproduced by a television receiver, the fixed pattern noise by the amplifiers A is suppressed. An image of a good quality can be obtained.

The invention is not limited to use of the foregoing base accumulating type photosensor. Other types of photosensor such as electrostatic inductive type, or the like can be used.

On the other hand, the present invention is not limited to the image pickup device but can be also applied to a general signal reading circuit.

As described in detail above, since the signal read-out circuit reads out signals to the signal line via amplifiers and resistor means, for example, even if the signals are transferred from the accumulation capacitance Cₜ to the capacitance Cₕ of the signal line, the gain can be set to about 1. The signal level does not decrease. Therefore, the load of the processing circuit and the like at the post stage can be reduced and the load capacitance can be further reduced. Thus, high speed operation can be performed.

On the other hand, since the foregoing amplifiers drive the signal line through series resistor means, the output currents of the amplifiers are reduced by the resistor means and variations in readout signal can be suppressed. Therefore, for example, if the invention is applied to read out image pickup signals, fixed pattern noise due to amplifier variance can be suppressed and a good quality image can be produced.

## Claims

1. A signal read-out circuit for image conversion, said circuit comprising:
signal sampling means (Qₐ₁ to Qₐₙ, Q_{bc1} to Q_{bcn}) for sampling electrical signals (S₁, ..., Sₙ) produced by a plurality of photoelectric conversion cells (SC) in response to incident light, and a plurality of capacitor means (C₁, ..., Cₙ), for storing respective sample charges temporarily in response to said signals (S₁, ..., Sₙ);
read-out means (A₁ to Aₙ, Q_{hc}, Q₁ to Qₙ, 101, 102) comprising scanning means (102) for reading said capacitor means (C₁, ... Cₙ) sequentially to produce a line sequential signal, said read-out means (A₁ to Aₙ, Q_{hc}, Q₁ to Qₙ, 101, 102) including a common output line (101) and a plurality of first amplifiers, each comprising a bipolar transistor (A₁, ..., Aₙ) the base of which is connected to a respective one of said plurality of capacitor means (C₁, ..., Cₙ) and the emitter of which is connected to said output line (101); and
a second amplifier (103) the input of which is connected to said output line (101);
said circuit being characterised in that the readout means comprises series resistance means (Q₁ to Qₙ) connected between the emitter of each bipolar transistor (A₁, .., Aₙ) and the connected input of said second amplifier (103), which series resistance means (Q₁ to Qₙ) is adapted for limiting the output current of the respective first amplifiers such as to substantially suppress variations in read-out signal attributable to emitter-current related variation in the diffusion capacitance (Cde) of each of said bipolar transistors (A₁, ..., Aₙ).

2. A circuit as claimed in claim 1 wherein said series resistance means (Q₁ to Qₙ) comprises respective resistance means (Q₁, ..., Qₙ) connected between the emitter of each respective bipolar transistor (A₁, ..., Aₙ) and said common output line (101).

3. A circuit as claimed in claim 2 wherein said read-out means (A₁ to Aₙ, Q_{hc}, Q₁ to Qₙ, 101, 102) comprises a plurality of field effect transistor switches (Q₁, ..., Qₙ) and a scan circuit (102), connected to the gate of each transistor switch (Q₁, ..., Qₙ), for addressing each transistor switch (Q₁, ..., Qₙ) sequentially, a respective one of said plurality of transistor switches (Q₁, ... Qₙ) being connected in series between the emitter of each respective one of said bipolar transistors (A₁, ..., Aₙ) and said common output line (101) and providing thus said respective resistance means (Q₁, ..., Qₙ).

4. A circuit as claimed in any preceding claim wherein said common output line (101) is connected to a common reset means (Q_{hc}).

5. A circuit as claimed in any preceding claim, wherein said signal sampling means (Qₐ₁ to Qₐₙ, Q_{bc1} to Q_{bcn}) comprises a plurality of field effect transistor switches (Qₐ₁, ..., Qₐₙ) connected each between a respective electrical signal input and a respective one of said plurality of capacitor means (C₁, ..., Cₙ).

6. A circuit as claimed in any preceding claim wherein said signal sampling means (Qₐ₁ to Qₐₙ, Q_{bc1} to Q_{bcn}) comprises a plurality of reset field effect transistor switches (Q_{bc1}, .., Q_{bcn}) connected each between circuit ground and a respective one of said plurality of capacitor means (C₁, .., Cₙ).

7. An image conversion device comprising, in combination:
a signal read-out circuit as claimed in any preceding claim; and
a plurality of photoelectric conversion cells (SC) connected to respective ones of said plurality of capacitor means (C₁, .., Cₙ) through said signal sampling means (Qₐ₁ to Qₐₙ, Q_{bc1} to Q_{bcn}).

8. A device as claimed in claim 7 wherein said conversion cells (SC) are arranged in a row.

9. A device as claimed in claim 7 wherein said conversion cells (SC) are arranged as a two dimensional array, are connected column-by-column and through said signal sampling means (Qₐ₁ to Qₐₙ, Q_{bc1} to Q_{bcn}) respective ones of said plurality of capacitor means (C₁, ..., Cₙ), and are connected row-by-row to a scan circuit (104), in which arrangement said conversion cells (SC) can be addressed and sampled in parallel one row at a time in turn.

## Patentansprüche

1. Signalauslese-Schaltkreis zur Bildumwandlung mit
einer Signalabtast-Einrichtung (Qₐ₁ bis Qₐₙ, Q_{bc1} bis Q_{bcn}) zum Abtasten von als Reaktion auf einfallendes Licht von einer Vielzahl von photoelektrischen Wandlerzellen (SC) erzeugten elektrischen Signalen (S₁ bis Sₙ) und einer Vielzahl von Kondensator-Einrichtungen (C₁ bis Cₙ) zum vorübergehenden Speichern entsprechender abgetasteter Ladungen auf die Signale (S₁ bis Sₙ) hin,
einer Ausleseeinrichtung (A₁ bis Aₙ, Q_{hc}, Q₁ bis Qₙ, 101, 102) mit einer Abtasteinrichtung (102) zum aufeinanderfolgenden Auslesen der Kondensator-Einrichtungen (C₁ bis Cₙ) zum Erzeugen eines seriellen Zeilensignals, wobei die Ausleseeinrichtung (A₁ bis Aₙ, Q_{hc}, Q₁ bis Qₙ, 101, 102) eine gemeinsame Ausgangsleitung (101) und eine Vielzahl von ersten Verstärkern umfaßt, die jeweils einen bipolaren Transistor (A₁ bis Aₙ) aufweisen, dessen Basis an einen entsprechenden der Vielzahl von Kondensator-Einrichtungen (C₁ bis Cₙ) und dessen Emitter an die Ausgangsleitung (101) angeschlossen ist, und einem zweiten Verstärker (103), dessen Eingang an die Ausgangsleitung (101) angeschlossen ist,
**dadurch gekennzeichnet, daß**
die Ausleseeinrichtung eine Reihenwiderstands-Einrichtung (Q₁ bis Qₙ) aufweist, die zwischen dem Emitter jedes bipolaren Transistors (A₁ bis Aₙ) und dem angeschlossenen Eingang des zweiten Verstärkers (103) geschaltet ist und zum Begrenzen des Ausgangsstroms der entsprechenden ersten Verstärker dient, damit Veränderungen im ausgelesenen Signal weitgehend unterdrückt sind, die auf eine auf den Emitterstrom bezogene Veränderung der Diffusionskapazität (C_{de}) jedes bipolaren Transistors (A₁ bis Aₙ) zurückzuführen sind.

2. Schaltkreis nach Anspruch 1,
**dadurch gekennzeichnet, daß**
die Reihenwiderstands-Einrichtung (Q₁ bis Qₙ) entsprechende Widerstandseinrichtungen (Q₁ bis Qₙ) aufweist, die zwischen den Emitter jedes entsprechenden bipolaren Transistors (A₁ bis Aₙ) und der gemeinsamen Ausgangsleitung (101) geschaltet sind.

3. Schaltkreis nach Anspruch 2,
**dadurch gekennzeichnet, daß**
die Ausleseeinrichtung (A₁ bis Aₙ, Q_{hc}, Q₁ bis Qₙ, 101, 102) eine Vielzahl von Feldeffekt-Transistorschaltern (Q₁ bis Qₙ) und eine Abtast-Schaltung (102) aufweist, die zum aufeinanderfolgenden Adressieren jedes Transistorschalters (Q₁ bis Qₙ) an das Gate jedes Transistorschalters (Q₁ bis Qₙ) angeschlossen ist, wobei ein entsprechender der Vielzahl von Transistorschaltern (Q₁ bis Qₙ) in Reihe zwischen dem Emitter eines entsprechenden der bipolaren Transistoren (A₁ bis Aₙ) und der gemeinsamen Ausgangsleitung (101) geschaltet ist und auf diese Weise die entsprechenden Widerstandseinrichtungen (Q₁ bis Qₙ) bildet.

4. Schaltkreis nach einem der vorangehenden Ansprüche,
**dadurch gekennzeichnet, daß**
die gemeinsame Ausgangsleitung (101) an eine gemeinsame Rücksetzeinrichtung (Q_{hc}) angeschlossen ist.

5. Schaltkreis nach einem der vorangehenden Ansprüche,
**dadurch gekennzeichnet, daß**
die Signalabtast-Einrichtung (Qₐ₁ bis Qₐₙ, Q_{bc1} bis Q_{bcn}) eine Vielzahl von Feldeffekt-Transistorschaltern (Qₐ₁ bis Qₐₙ) aufweist, die jeweils zwischen einem entsprechenden elektrischen Signal-Eingang und einem entsprechenden der Vielzahl von Kondensator-Einrichtungen (C₁ bis Cₙ) geschaltet sind.

6. Schaltkreis nach einem der vorangehenden Ansprüche,
**dadurch gekennzeichnet, daß**
die Signalabtast-Einrichtung (Qₐ₁ bis Qₐₙ, Q_{bc1} bis Q_{bcn}) eine Vielzahl von Rücksetz-Feldeffekt-Transistorschaltern (Q_{bc1} bis Q_{bcn}) aufweist, die jeweils zwischen der Schaltkreis-Masse und einem entsprechenden der Vielzahl von Kondensator-Einrichtungen (C₁ bis Cₙ) geschaltet sind.

7. Bildumwandlungseinrichtung mit der Kombination aus
einem Signalauslese-Schaltkreis nach einem der vorangehenden Ansprüche und
einer Vielzahl von photoelektrischen Wandlerzellen (SC), die über die Signalabtast-Einrichtung (Qₐ₁ bis Qₐₙ, Q_{bc1} bis Q_{bcn}) an entsprechende der Vielzahl von Kondensator-Einrichtungen (C₁ bis Cₙ) angeschlossen sind.

8. Einrichtung nach Anspruch 7,
**dadurch gekennzeichnet, daß**
die Wandlerzellen (SC) in einer Spalte angeordnet sind.

9. Einrichtung nach Anspruch 7,
**dadurch gekennzeichnet, daß**
die Wandlerzellen (SC) als ein zweidimensionales Feld spaltenweise miteinander angeordnet sind und über die Signalabtast-Einrichtung (Qₐ₁ bis Qₐₙ, Q_{bc1} bis Q_{bcn}) mit entsprechenden der Vielzahl von Kondensator-Einrichtungen (C₁ bis Cₙ) verbunden sind und zeilenweise an einen Abtast-Schaltkreis (104) angeschlossen sind, wobei in dieser Anordnung die Wandlerzellen (SC) auf parallele Weise für jeweils eine Zeile adressiert und abgetastet werden können.

## Revendications

1. Un circuit de lecture de signal pour la conversion d'image, ce circuit comprenant :
des moyens d' échantillonnage de signaux (Qₐ₁ à Qₐₙ, Q_{bc1} à Q_{bcn}) pour échantillonner des signaux électriques (S₁, ..., Sₙ) qui sont produits par un ensemble de cellules de conversion photoélectriques (SC) sous la dépendance de la lumière incidente, et un ensemble de condensateurs (C₁, ..., Cₙ), pour enregistrer temporairement des charges d' échantillons respectives sous la dépendance des signaux précités (S₁, ..., Sₙ) ;
des moyens de lecture (A₁ à Aₙ, Q_{hc}, Q₁ à Qₙ, 101, 102) comprenant des moyens de balayage (102) pour lire séquentiellement le contenu des condensateurs (C₁, ... , Cₙ) de façon à produire un signal séquentiel par ligne, ces moyens de lecture (A₁ à Aₙ, Q_{hc}, Q₁ à Qₙ, 101, 102) comprenant une ligne de sortie commune (101) et un ensemble de premiers amplificateurs, comprenant chacun un transistor bipolaire (A₁, ..., Aₙ) dont la base est connectée à un condensateur respectif de l'ensemble de condensateurs (C₁, ..., Cₙ), et dont l' émetteur est connecté à la ligne de sortie (101) ; et
un second amplificateur (103) dont l'entrée est connectée à la ligne de sortie (101) ;
ce circuit étant caractérisé en ce que les moyens de lecture comprennent des moyens à résistances série (Q₁ à Qₙ) connectés entre l' émetteur de chaque transistor bipolaire (A₁, ... Aₙ) et l'entrée connectée du second amplificateur (103), ces moyens à résistances série (Q₁ à Qₙ) étant conçus pour limiter le courant de sortie des premiers amplificateurs respectifs, afin d' atténuer notablement des variations du signal de sortie qui sont attribuables à une variation liée au courant d' émetteur dans la capacité de diffusion (Cde) de chacun des transistors bipolaires (A₁, ..., Aₙ) .

2. Un circuit selon la revendication 1, dans lequel les moyens à résistances série (Q₁ à Qₙ) comprennent des moyens à résistances respectifs (Q₁, ..., Qₙ) connectés entre l' émetteur de chaque transistor bipolaire respectif (A₁, ..., Aₙ) et la ligne de sortie commune (101).

3. Un circuit selon la revendication 2, dans lequel les moyens de lecture (A₁ à Aₙ, Q_{hc}, Q₁ à Qₙ, 101, 102) comprennent un ensemble d'éléments de commutation à transistor à effet de champ (Q₁, ..., Qₙ) et un circuit de balayage (102), connecté à la grille de chaque élément de commutation à transistor (Q₁, ..., Qₙ), pour adresser séquentiellement chaque élément de commutation à transistor (Q₁, ..., Qₙ) l'un respectif des éléments de l'ensemble d'éléments de commutation à transistor (Q₁, ..., Qₙ) étant connecté en série entre l'émetteur de chaque transistor respectif parmi les transistors bipolaires (A₁, ..., Aₙ) et la ligne de sortie commune (101), et constituant ainsi le moyen à résistance respectif (Q₁, ..., Qn).

4. Un circuit selon l'une quelconque des revendications précédentes, dans lequel la ligne de sortie commune (101) est connectée à des moyens de restauration communs (Q_{hc}).

5. Un circuit selon l'une quelconque des revendications précédentes, dans lequel les moyens d' échantillonnage de signaux (Qₐ₁ à Qₐₙ, Q_{bc1} à Q_{bcn}) comprennent un ensemble d'éléments de commutation à transistor à effet de champ (Qₐ₁, ..., Qₐₙ), chacun d'eux étant connecté entre une entrée de signal électrique respective et l'un respectif des condensateurs de l'ensemble de condensateurs (C₁, ..., Cₙ).

6. Un circuit selon l'une quelconque des revendications précédentes, dans lequel les moyens d' échantillonnage de signaux (Qₐ₁ à Qₐₙ, Q_{bc1} à Q_{bcn}) comprennent un ensemble d'éléments de commutation à transistor à effet de champ de restauration (Q_{bc1}, ..., Q_{bcn}), chacun d'eux étant connecté entre la masse du circuit et l'un respectif des condensateurs de l'ensemble de condensateurs (C₁, ..., Cₙ).

7. Un dispositif de conversion d'image comprenant, en combinaison :
un circuit de lecture de signal selon l'une quelconque des revendications précédentes ; et
un ensemble de cellules de conversion photoélectriques (SC) connectées à des condensateurs respectifs de l'ensemble de condensateurs (C₁, ..., Cₙ) par l'intermédiaire des moyens d'échantillonnage de signaux (Qₐ₁ à Qₐₙ, Q_{bc1} à Q_{bcn}).

8. Un dispositif selon la revendication 7, dans lequel les cellules de conversion (SC) sont disposées en une ligne.

9. Un dispositif selon la revendication 7, dans lequel les cellules de conversion (SC) sont disposées sous la forme d'un réseau bidimensionnel, elles sont connectées colonne par colonne et par l'intermédiaire des moyens d' échantillonnage de signaux (Qₐ₁ à Qₐₙ, Q_{bc1} à Q_{bcn}) à des condensateurs respectifs de l'ensemble de condensateurs (C₁, ..., Cₙ), et elles sont connectées ligne par ligne à un circuit de balayage (104), et dans cette configuration les cellules de conversion (SC) peuvent être adressées et échantillonnées en parallèle, une ligne à la fois, en succession.
